(19) Europäisches Patentamt
European Patent Office
Office européen des brevets

(11) Veröffentlichungsnummer: **0 012 302**
**B1**

(12) **EUROPÄISCHE PATENTSCHRIFT**

(45) Veröffentlichungstag der Patentschrift: **09.03.83**

(51) Int. Cl.³: **C 08 F 10/00,** C 08 F 4/64

(21) Anmeldenummer: **79104814.3**

(22) Anmeldetag: **01.12.79**

# (54) Verfahren zum Herstellen von Homo- und Copolymerisaten von alpha-Monoolefinen mittels eines Ziegler-Katalysatorsystems.

(30) Priorität: **07.12.78 DE 2852902**

(43) Veröffentlichungstag der Anmeldung:
**25.06.80 Patentblatt 80/13**

(45) Bekanntmachung des Hinweises auf die Patenterteilung:
**09.03.83 Patentblatt 83/10**

(84) Benannte Vertragsstaaten:
**AT BE DE FR GB IT**

(56) Entgegenhaltungen:
**DE - A - 1 420 732**
**DE - A - 2 129 659**
**US - A - 3 941 760**

(73) Patentinhaber: **BASF Aktiengesellschaft**
**Carl-Bosch-Strasse 38**
**D-6700 Ludwigshafen (DE)**

(72) Erfinder: **Klaerner, Peter, Dr., Dipl.-Chem.**
**Hauptstrasse 62**
**D-6719 Battenberg (DE)**
Erfinder: **Schweier, Guenther, Dr., Dipl.-Chem.**
**Mundenheimer Strasse 148**
**D-6700 Ludwigshafen (DE)**
Erfinder: **Gruber, Wolfgang, Dr., Dipl.-Chem.**
**Lorscher Ring 2B**
**D-6710 Frankenthal (DE)**
Erfinder: **Frielingsdorf, Hans, Dr., Dipl.-Ing.**
**Auf dem Koeppel 4**
**D-6702 Bad Duerkheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 012 302 B1

# Verfahren zum Herstellen von Homo- und Copolymerisaten von $\alpha$-Monoolefinen mittels eines Ziegler-Katalysatorsystems

Die vorliegende Erfindung baut auf auf einem Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest,

X für Chlor, Brom bzw. Wasserstoff und

n für eine Zahl von 0 bis 2

mit den Maßgaben, daß das Atomverhältnis Titan aus der Katalysatorkomponente (1): Aluminium aus der Katalysatorkomponente (2) im Bereich von 1:0,1 bis 1:500 liegt, und daß man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweise können, oder der Mischchloride des dreiwertigen Titans mit der Formel

$$TiCl_3 . Z(AlCl_3),$$

wobei Z eine Zahl von weniger als 0,5 ist, und

(1.1.2) eine Halogenverbindung (II), die erhalten worden ist durch ein 1 bis 100 Stunden dauerndes Heißhalten auf einer Temperatur von 150 bis 600°C und anschließendes Chlorieren bis zu einem Chlorgehalt des Materials von 40 bis 76 Gewichtsprozent, aus einem Stoff (III) der allgemeinen Formel

$$(Me^{II})_6 . (Me^{III})_2 . (OH)_{16} . (CO_3)_1 . (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I):Halogenverbindung (II) von 1:200 bis 1:2 über eine Zeitspanne von 5 bis 100 Stunden unter einer Mahlbeschleunigung von 4 bis 6 $m/s^2$ trocken miteinander vermahlt unter Bildung eines festphasigen Vermahlungsprodukts (IV).

Verfahren dieser Gattung sind bekannt, wobei als Prototyp für den vorleigenden Fall das z.B. in der US—PS 3 941 760 veröffentlichte gelten kann.

Das genannte Verfahren hat — ebenso wie in Parallele zu setzende andere Verfahren — zum Kernstück eine in besonderer Weise hergestellte und damit in besonderer Weise ausgestaltete Titan enthaltende Katalysatorkomponente (1).

Die besonderen Ausgestaltungen der Titan enthaltenden Katalysatorkomponente werden vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorsysteme (1) erhöht ist.

(b) Katalysatorsysteme, durch die weniger bzw. kein Halogen in das Polymerisat eingebracht wird; — was zu erreichen ist, indem

($b_1$) die Ausbeute gemäß (a) gesteigert wird und/oder

($b_2$) Titan enthaltende Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; — was z.B. für Trockenphasenpolymerisationen von Bedeutung sein kann.

(d) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; — was z.B. für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; — z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtreglern, wie Wasserstoff, mit relativ geringen Mengen an Regler auszukommen; —

was z.B. für die Thermodynamik der Verfahrensführung von Bedeutung sein kann.

(g) Katalysatorsysteme, die auf spezielle Polymerisationsverfahren zugeschnitten sind; — etwa solche, die z.B. entweder auf die spezifischen Besonderheiten der Suspensionspolymerisation oder auf die spezifischen Besonderheiten der Trockenphasenpolymerisation abgestimmt sind.

Nach den bisherigen Erfahrungen gibt es unter den mannigfachen Zielen, etliche Ziele, die man durch besondere Ausgestaltungen der Titan enthaltenden Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt auch die Aufgabenstellung der vorleigenden Erfindung: Eine neue Art Titan enthaltender Katalysatorkomponente aufzuzeigen, mit der man gegenüber bekannten Titan enthaltenden Katalysatorkomponenten — unter vergleichbarer Zielsetzung — bessere Ergebnisse erreichen kann.

Es wurde gefunden, daß die gestellte Aufgabe gelöst werden kann mit einer Titan enthaltenden Katalysatorkomponente, die ein in besonderer Weise erhaltenes Folgeprodukt des Vermahlungsprodukts (IV) aus dem eingangs definierten Verfahren ist.

Gegenstand der vorliegenden Erfindung ist dementsprechend ein Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

X für Chlor, Brom bzw. Wasserstoff, vorzugsweise Chlor bzw. Wasserstoff, und

n für eine Zahl von 0 bis 2, vorzugsweise eine Zahl von 0 bis 1, und insbesondere die Zahl 0,

mit den Maßgaben, daß das Atomverhältnis Titan aus der Katalysatorkomponente (1):Aluminium aus der Katalysatorkomponente (2) im Bereich von 1:0,1 bis 1:500, vorzugsweise 1:0,2 bis 1:200, liegt, und daß man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweisen können, oder — vorzugsweise — der Mischchloride des dreiwertigen Titans mit der Formel

$$TiCl_3 \,.\, Z(AlCl_3),$$

wobei Z eine Zahl von weniger als 0,5, insbesondere eine Zahl von 0,31 bis 0,35 ist, und

(1.1.2) eine Halogenverbindung (II), die erhalten worden ist durch ein 1 bis 100, vorzugsweise 2 bis 50 Stunden dauerndes Heißhalten auf einer Temperatur von 150 bis 600, vorzugsweise von 200 bis 400°C, und anschließendes Chlorieren bis zu einem Chlorgehalt des Materials von 40 bis 76, vorzugsweise von 50 bis 72 Gewichtsprozent, aus einem Stoff (III) der allgemeinen Formel

$$(Me^{II})_6 \,.\, (Me^{III})_2 \,.\, (OH)_{16} \,.\, (CO_3)_1 \,.\, (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I):Halogenverbindung (II) von 1:200 bis 1:2, vorzugsweise 1:10 bis 1:20 über eine Zeitspanne von 5 bis 100, vorzugsweise 10 is 20 Stunden unter einer Mahlbeschleunigung von 4 bis 6 $m/s^2$ trocken miteinander vermahlt unter Bildung eines festphasigen Vermahlungsprodukts (IV).

Das erfindungsgemäße Verfahren ist dadurch gekennzeichnet, daß man beim Herstellen der Katalysatorkomponente (1)

(1.2) in einer zusätzlichen Stufe

(1.2.1) das gemäß (1.1) erhaltene Vermahlungsprodukt (IV),

(1.2.2) ein $C_1$- bis $C_{12}$-, vorzugsweise ein $C_1$- bis $C_8$-Alkanol (V) und

(1.2.3) ein $C_5$- bis $C_{12}$-, vorzugsweise ein $C_6$- bis $C_8$-Alkan (VI)

in den Gewichtsverhältnissen Vermahlungsprodukt (IV):Alkanol (V) von 1:0,01 bis 1:1, vorzugsweise 1:0,03 bis 1:0,75 und Vermahlungsprodukt (IV):Alkan (VI) von 1:1 bis 1:1 000, vorzugsweise 1:1 bis

1:100, zusammenbringt unter Bildung einer Suspension (VII) und das Ganze bei dauernder Durchmischung über eine Zeitspanne von 0,5 bis 60, vorzugsweise 1 bis 30, und insbesondere 1 bis 10, Minuten auf einer Temperatur von 0 bis 195, vorzugsweise 10 bis 100°C hält, und dann

(1.3) — gegenbenenfalls und vorteilhafterweise — in einer weiteren Stufe

(1.3.1) die gemäß (1.2) erhaltene Suspension (VII) mit

(1.3.2) einer Metallverbindung (VIII) der allgemeinen Formel

$$Mt\, G_{s-t}\, E_t,$$

worin stehen

Mt für die Metalle Aluminium bzw. Silicium, vorzugsweise Aluminium,

G für einen $C_1$- bis $C_{12}$-Kohlenwasserstoffrest vorzugsweise einen $C_1$- bis $C_{12}$-Alkylrest, und insbesondere einen $C_2$- bis $C_8$-Alkylrest.

E für Chlor, Brom, Wasserstoff bzw. einen Rest —OD, vorzugsweise Chlor bzw. Wasserstoff,

D für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

s für die Zahl der Wertigkeit des Metalls Mt und

t für eine Zahl von (a) 0 bis s — 1, vorzugsweise eine Zahl von 1 bis 2, wenn Mt Aluminium ist bzw. (b) 0 bis 4, vorzugsweise 1 bis 4, wenn Mt Silicium ist,

unter Erhaltung des Zustandes einer Suspension solange versetzt, bis das Atomverhältnis Titan aus dem in der Suspension (VII) enthaltenen Feststoff:Metall aus der Metallverbindung (VIII) im Bereich von 1:0,5 bis 1:20, vorzugsweise von 1:1 bis 1:10 liegt;

wobei das aus Stufe (1.2) bzw. (1.3) resultierende, in Suspension vorliegende festphasige Produkt die Titan enthaltende Katalysatorkomponente (1) ist.

Zu dem erfindungsgemäßen Verfahren ist im einzelnen das Folgende zu bemerken:

Das Polymerisationsverfahren als solches kann — under Beachtung der kennzeichnenden Besonderheiten — in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von Olefinen nach Ziegler — sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) — wie entsprechende bekannte Katalysatorkomponenten — z.B. außerhalb oder innerhalb des Polymerisationsgefäßes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können.

Zu der neuen Titan enthaltenden Katalysatorkomponente (1) selbst ist das Folgende zu sagen:

Ihre Herstellung erfolgt in zwei oder drei Stufen, die oben sowie nachstehend mit (1.1), (1.2) und (1.3) bezeichnet sind.

In Stufe (1.1) werden eine unter Normalbedingungen feste Titanverbindung (I) der oben definierten Art und eine bestimmte, in der oben definierten Weise erhaltene Halogenverbindung (II) trocken miteinander vermahlen unter Bildung eines festphasigen Vermahlungsprodukts (IV). In Stufe (1.2) wird letzteres mit einem bestimmten Alkanol (V) und einem bestimmen Alkan (VI) zusammengebracht unter Bildung einer Suspension (VII). In — der gegebenenfalls und vorteilhafterweise durchzuführenden — Stufe (1.3) wird die letztgenannte Suspension mit einer Metallverbindung (VIII) der oben definierten Art unter Erhaltung des Zustandes einer Suspension versetzt. Das aus den Stufen (1.2) bzw. (1.3) resultierende, in Suspension vorliegende festphasige Produkt ist die neue Titan enthaltende Katalysatorkomponente (1).

Im einzelnen ist dazu das Folgende zu sagen:

Stufe (1.1)

Die Vermahlung in dieser Stufe ist mit keinen Besonderheiten verbunden und kann vom Fachmann ohne nähere Erläuterungen problemlos durchgeführt werden. Zu erwähnen ist allenfalls, daß sich als Mühlen insbesondere Kugelmühlen, vor allem Kugelschwingmühlen, eignen; im übrigen kann auf die eingangs bereits zitierte US—PS 3 941 760 verwiesen werden.

Stufe (1.2)

Das Herstellen der Suspension in dieser Stufe ist ebenfalls mit keinen Schwierigkeiten verbunden und für den Fachmann ohne weiteres möglich. Zu erwähnen ist, daß sich als vorteilhaft herausgestellt hat, zunächst das Vermahlungsprodukt (IV) in dem Alkan (VI) zu suspendieren — so wie man üblicherweise suspendiert, z.B. in einem Rührgefäß — und zu der dabei erhaltenen Suspension dann den Alkohol (V) mit einer solchen Geschwindigkeit zuzugeben, daß örtliche Wärmestaus vermieden werden.

Stufe (1.3)

Auch diese Stufe ist ohne Probleme durchführbar; zu beachten ist lediglich, daß die dabei ablaufende Reaktion exotherm ist und daher — ebenfalls zur Vermeidung örtlicher größerer Wärmestaus — die Metallverbindung (VIII) nicht schußweise in die Suspension (VII) eingebracht werden sollte.

Die aus den Stufen (1.2) bzw. (1.3) als suspendiertes festphasiges Produkt resultierende neue Titan enthaltende Katalysatorkomponente (1) kann unmittelbar in Form der jeweils erhaltenen Suspension — gegebenenfalls nach einer Wäsche durch Digerieren mit einem Alkan — als Titan enthaltende Katalysatorkomponente verwendet werden. Im allgemeinen ist es aber zweckmäßig, das jeweilige festphasige Product zu isolieren und dann erst als Katalysatorkomponente (1) einzusetzen; — wobei sich zum Isolieren z.B. der folgende Weg anbietet: Man trennt das festphasige Produkt von der flüssigen Phase mittels Filtration und wäscht est mit reinem Alkan (etwa der Art, die man auch als Suspensionsmittel verwendet hatte), worauf man es trocknet, etwa im Vakuum.

Die neuen Titan enthaltenden Katalysatorkomponenten (1), d.h. die festphasigen Produkte (VI), lassen sich im Rahmen des eingangs definierten Verfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also beim erfindungsgemäßen Verfahren keine Besonderheiten gegeben, und es kann auf die aus Literatur und Praxis wohlbekannten Einsatzweisen verwiesen werden. — Es ist lediglich noch zu sagen, daß das Verfahren sich vornehmlich zum Herstellen von Homopolymerisaten des Äthylens eignet und daß im Falle des Herstellens von Copolymerisation des Äthylens mit höheren $\alpha$-Monoolefinen oder des Herstellens von Homopolymerisaten von höheren $\alpha$-Monoolefinen vor allem Propen, Buten-1, 4-Methylpenten-1 und Hexen-1 als $\alpha$-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der Neuen Titan enthaltenden Katalysatorkomponenten (1) betrifft, ist im einzelnen noch das Folgende zu sagen:

Die in Stufe (1.1) einzusetzenden, unter Normalbedingungen festen Titanverbindungen (I) können z.B. sein Titantrichlorid als solches, oder ein Alkoxychlorid der Formel $TiCl(OC_3H_7)_3$. Die demgegenüber zu bevorzugenden Mischchloride des dreiwertigen Titans mit der oben definierten Formel $TiCl_3 . Z(AlCl_3)$ können insbesondere die bei Ziegler-Katalysatorsystemen üblichen sein, z.B. ein bei der Reduktion von Titantetrachlorid mittels Aluminium erhaltenes Reaktionsprodukt. Als besonders gut geeignet hat sich erwiesen, das Mischchlorid der Formel $TiCl_3 . \frac{1}{3}AlCl_3$. — Die Titanverbindungen (I) können eingesetzt werden in Form von Einzelindividuen sowie Gemischen aus zwei oder mehr Einzelindividuen.

Die ebenfalls in Stufe (1.1) einzusetzenden Halogenverbindungen (II), deren Herstellung sowie Vorprodukte — also die Stoffe (III) mit der oben definierten Formel $(Me^{II})_6 . (Me^{III})_2 . (OH)_{16} . (CO_3)_1 . (H_2O)_4$ — gehören zum bekannten Stand der Technik, wie er z.B. in der GP—PS 1 380 949 niedergelegt ist. In soweit erübrigen sich also nähere Erläuterungen. Zu bemerken ist jedoch, daß sich für den erfindungsgemäßen Zweck solche Stoffe (III) besonders eignen, in deren Formel $Me^{II}$ steht für Magnesium, Mangan oder Gemische aus einem oder beiden dieser Elemente mit untergeordneten Molmengen Zink, und $Me^{III}$ steht für Aluminium oder Gemische aus diesem Element mit untergeordneten bis gleichen Molmengen Chrom. Geeignete Stoffe (III) haben z.B. die Elementkombination $(Mg^{II})_5 . (Ca^{II}) . (Al^{III})_2$ oder $(Mn^{II})_5 . (Ca^{II}) . (Al^{III})_2$ und vorzuziehende Stoffe (III) z.B. die Kombinationen $(Mg^{II})_5 . (Zn^{II}) . (Al^{III})_2$, $(Mg^{II})_4 . (Zn^{II})_2 . (Al^{III})_2$, $(Mn^{II})_6 . (Al^{III})_2$, $(Mn^{II})_5(Zn^{II}) . (Al^{III})_2$, $(Mn^{II})_4 . (Zn^{II})_2 . (Al^{III})_2$, $(Mg^{II})_6 . (Al^{III}) . (Cr^{III})$ oder $(Mn^{II})_6 . (Al^{III}) . (Cr^{III})$. Der am besten geeignete Stoff (III) hat die Elementekombination $(Mg^{II})_6 . (Al^{III})_2$. — Die Halogenverbindungen (II) können im übrigen eingesetzt werden in Form von Einzelindividuen oder Gemischen aus zwei oder mehr Einzelindividuen.

In Stufe (1.2) werden $C_1$- bis $C_{12}$-Alkanole (V) eingesetzt; namentliche Beispiele hierfür sind Methanol, Athanol, die Propanole sowie die Butanole; ferner n-Hexanol, 2-Äthylhexanol, n-Octanol, n-Decanol und 2,7-Diäthyloctanol. Als besonders gut geeignet haben sich erwiesen, z.B. Methanol, Äthanol, Isopropanol sowie n-Butanol. — Die Alkanole (V) können eingesetzt werden in Form von Einzelindividuen sowie Gemischen aus zwei oder mehr Einzelindividuen.

Ebenfalls in Stufe (1.2) werden eingesetzt $C_5$- bis $C_{12}$-Alkane (VI), z.B. Cyclopentan, Cyclohexan, n-Hexan, n-Heptan, 2-Äthylhexan, n-Octan, n-Decan oder n-Dodecan. Zu bevorzugen sind die Hexane, Heptane und Oktane in Form von Isomerindividuen oder Isomermischungen. Besonders gut geeignet ist n-Heptan. — Auch die Alkane (VI) können im übrigen eingesetzt werden in Form von Einzelindividuen sowie Gemischen aus zwei oder mehr Einzelindividuen.

Die in Stufe (1.3) einzusetzenden Metallverbindungen (VIII) haben die oben definierte Formel $Mt\, G_{s-t}E_t$ und können zweckmäßigerweise eine Verbindung aus den folgenden beiden Verbindungsklasse sein:

Aluminiumverbindungen, wie sie repräsentiert werden durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ und $Al(C_2H_5)_{1,5}(OC_2H_5)_{1,5}$; — wovon besonders gut geeignet sind $Al(C_2H_5)_2Cl$, $Al(C_2H_5)_{1,5} . Cl_{1,5}$, $Al(C_2H_5)Cl_2$ sowie $Al(C_2H_5)_2H$.

Siliciumverbindungen, wie sie repräsentiert werden durch die Formeln $SiCl_4$, $SiBr_4$, $Si(CH_3)_2Cl_2$, $Si(CH_3)_3Cl$, $SiHCl_3$, $Si(C_2H_5)_3H$, $Si(OC_2H_5)_4$ und $Si(OC_6H_5)_4$; — wovon besonders gut geeignet sind $SiCl_4$,

$Si(CH_3)_3Cl$, $Si(C_2H_5)_3Cl$ sowie $Si(C_2H_5)_3H$.

Die Metallverbindungen (VIII) können eingesetzt werden in Form von Einzelindividuen sowie Gemischen aus zwei oder mehr Einzelindividuen.

Der Vorteil bei der Mitverwendung der Metallverbindungen (VIII), d.h. bei der Durchführung der Stufe (1.3), liegt im allgemeinen darin, daß die Produktivität der Katalysatorsysteme (bezogen auf Titan) erhöht ist und die Polymerisate in besonders festem Korn erhalten werden können.

Die Katalysatorkomponente (2) betreffend ist zu sagen, daß sich hierfür die einschlägig üblichen Verbindungen eignen; als geeignete Individuen sind z.B. zu nennen das $Al(C_2H_5)_3$, $Al(i\text{-}C_4H_9)_3$, $Al(n\text{-}C_4H_9)_3$, $Al(C_8H_{17})_3$ und Isoprenylaluminium.

Abschließend ist noch zu bemerken, daß die erfindungsgemäßen Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Intergasatmosphäre).

Beispiel 1

a) Herstellen der Titan enthaltenden Katalysatorkomponente

Erste Stufe

Ein handelsübliches Mischchlorid (I) des dreiwertigen Titans mit der Formel $TiCl_3 \cdot 0{,}33\ AlCl_3$ und eine Halogenverbindung (II), die erhalten worden ist durch ein 8 Stunden dauerndes Heißhalten auf einer Temperatur von 160°C und anschließendes Chlorieren mittels Phosgen bei einer Temperatur von 330°C bis zu einem Chlorgehalt des Materials von 66 Gewichtsprozent aus einem Stoff (III) der Formel $Mg_6 \cdot Al_2 \cdot (OH)_{16} \cdot (CO_3)_1 \cdot (H_2O)_4$ werden im Gewichtsverhältnis Titanverbindung (I): Halogenverbindung (II) von 1:9 über eine Zeitspanne von 15 Stunden unter einer Mahlbeschleunigung von 5 $m/s^2$ trocken miteinander vermahlen (in einer üblichen Kugelmühle) unter Bildung eines festphasigen Zwischenprodukts (IV).

Zweite Stufe

1 Gewichtsteil des aus der ersten Stufe erhaltenen Zwischenprodukts (IV), 0,26 Gewichtsteile Äthanol (V) und 20 Gewichtsteile n-Heptan (VI) werden derart zusammengebracht, daß man zunächst das Zwischenprodukt im n-Heptan suspendiert und dann innerhalb von 5 Minuten das Äthanol zur Suspension gibt. Das Ganze (= Suspension VII) wird daraufhin unter kräftigem Rühren üuber eine Zeitspanne von 5 Minuten auf einer Temperatur von 25°C gehalten.

Dritte Stufe

Sie entfällt.

Das aus der zweiten Stufe resultierende, in Suspension vorliegende festphasige Produkt, d.h. die gewünschte Titan enthaltende Katalysatorkomponente, wird isoliert durch Absaugen, Waschen mit n-Hepten und Trocknen bei 25°C unter vermindertem Druck; der Titangehalt beträgt 2,37 Gewichtsprozent, der Chlorgehalt 52,6 Gewichtsprozent.

b) Polymerisation mittels der Titan enthaltenden Katalysatorkomponente.

In einem Rührautoklaven — der damit zur Hälfte seines Fassungsvermögens gefüllt ist — werden 4 500 Gewichtsteile Isobutan vorgelegt; daraufhin fügt man 0,2 Gewichtsteile der erfindungsgemäßen Katalysatorkomponente (in Form einer 15 Gew.% Feststoff enthaltenden Suspension in n-Heptan) sowie 2,5 Gewichtsteile Triäthylaluminium zu. Sodann wird unter Rühren und bei den — jeweils durch Regelung konstant gehaltenen — Parametern: Äthylendruck = 15 bar, Wasserstoffdruck (zur Molekulargewichtsregelung) = 5 bar, Temperatur = 100°C, über eine Zeitspanne von 2 Stunden polymerisiert, wonach die Polymerisation durch Entspannen des Autoklaven abgebrochen wird.

Nähere Angaben zu dem erhaltenen Polymerisat finden sich in der unten stehenden Tabelle.

Beispiel 2

a) Herstellen der Titan enthaltenden Katalysatorkomponente

Erste Stufe

Sie erfolgt wie in Beispiel 1

Zweite Stufe

1 Gewichtsteil des aus der ersten Stufe erhaltenen Zwischenprodukts (IV), 0,23 Gewichtsteile Äthanol (V) und 6 Gewichtsteile N-Heptan (VI) werden derart zusammengebracht, daß man zunächst das Zwischenprodukt im n-Heptan suspendiert und dann innerhalb von 20 Minuten das Athanol zur Suspension gibt. Das Ganze (= Suspension VII) wird daraufhin unter kräftigem Rühren über eine Zeitspanne von 5 Minuten auf einer Temperatur von 25°C gehalten.

Dritte Stufe

Die aus der zweiten Stufe erhaltene Suspension (VII) wird auf eine Temperatur von 50°C gebracht und bei dieser Temperatur mit Siliziumtetrachlorid unter Erhaltung des Zustandes einer Suspension solange langsam (15 Minuten) versetzt, bis das Atomverhältnis Titan aus dem in der Suspension (VII) enthaltenen Feststoff: Silizium 1:4,7 beträgt. Anschließend wird das Ganze bei einer Temperatur von 75°C noch eine weitere Stunde gerührt.

Das aus der dritten Stufe resultierende, in Suspension vorliegende festphasige Produkt, d.h. gie gewünschte Titan enthaltende Katalysatorkomponente, wird isoliert durch Absaugen, Waschen mit n-Heptan und Trocknen bei 25°C unter vermindertem Druck; der Titangehalt beträgt 0,96 Gewichtsprozent, der Chlorgehalt 56,4 Gewichtsprozent und der Siliziumgehalt 2,63 Gewichtsprozent.

b) Polymerisation mittels der Titan enthaltenden Katalysatorkomponente.

Sie erfolgt unter identischen Bedingungen, wie in Beispiel 1, jedoch unter Verwendung der aus der dritten Stufe erhaltenen Katalysatorkomponente.

Nähere Angaben zu dem dabei erhaltenen Polymerisat finden sich ebenfalls in der unten stehenden Tabelle.

Vergleichsversuch A

a) Herstellen der Titan enthaltenden Katalysatorkomponente

Erste Stufe

Sie erfolgt in Idendität zu Beispiel 1.

Zweite und dritte Stufe

Sie entfallen beide.

b) Polymerisation mittels der Titan enthaltenden Katalysatorkomponente.

Sie erfolgt unter identischen Bedingungen wie in Beispiel 1, jedoch unter Verwendung der aus der ersten Stufe erhaltenen Katalysatorkomponente (= Zwischenprodukt IV).

Nähere Angaben zu dem dabei erhaltenen Polymerisat finden sich wiederum in der unten stehenden Tabelle.

In der Tabelle bedeuten:

PE = Ausbeute an Polyäthylen in Gewichtsteilen

PE/Kk = Produktivität in Gewichtsteilen Polyäthylen pro Gewichtsteil erfindungsgemäßer Katalysatorkomponente

PE/Ti = Produktivität in Gewichtsteilen Polyäthylen pro Gewichtsteil Titan in der erfindungsgemäßen Katalysatorkomponente

Sch = Schüttgewicht in g/l

MI = Schmelzindex $MI_{2,16}^{190}$ (g/10 Min)

%<0,1 = Anteil an Polyäthylen-Partikeln in Gewichtsprozent mit einem Teilchendurchmesser von kleiner 0,1 mm (Feinstkornanteile).

| Beispiel bzw. Vgl.-Vers. | PE | PE/Kk | PE/Ti | Sch | MI | % 0,1 |
|---|---|---|---|---|---|---|
| 1 | 2 650 | 13 300 | 560 000 | 280 | 4,5 | 0,7 |
| 2 | 2 470 | 12 400 | 1 290 000 | 370 | 3,2 | 0,1 |
| A | 2 490 | 12 500 | 500 000 | 270 | 0,5 | 5,6 |

**Patentanspruch**

Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200°C und Drücken von 0,1 bis 200 bar mittels einer Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest,

X für Chlor, Brom bzw. Wasserstoff und

n für eine Zahl von 0 bis 2,

mit den Maßgaben, daß das Atomverhältnis Titan aus der Katalysatorkomponente (1) : Aluminium aus der Katalysatorkomponente (2) im Bereich von 1:0,1 bis 1:500 liegt, und daß man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweisen können, oder der Mischchloride des dreiwertigen Titans mit der Formel

$$TiCl_3 \cdot Z(AlCl_3),$$

wobei Z eine Zahl von weniger als 0,5 ist, und

(1.1.2) eine Halogenverbindung (II), die erhalten worden ist durch ein 1 bis 100 Stunden dauerndes Heißhalten auf einer Temperatur von 105 bis 600°C und anschließendes Chlorieren bis zu einem Chlorgehalt des Materials von 40 bis 76 Gewichtsprozent, aus einem Stoff (III) der allgemeinen Formel

$$(Me^{II})_6 . (Me^{III})_2 . (OH)_{16} . (CO_3)_1 . (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I):Halogenverbindung (II) von 1:200 bis 1:2 über eine Zeitspanne von 5 bis 100 Stunden unter einer Mahlbeschleunigung von 4 bis 6 $m/s^2$ trocken miteinander vermahlt unter Bildung eines festphasigen Vermahlungsprodukts (IV), dadurch gekennzeichnet, daß man beim Herstellen der Katalysatorkomponente (1)

(1.2) in einer zusätzlichen Stufe

(1.2.1) das gemäß (1.1) erhaltene Vermahlungsprodukt (IV),

(1.2.2) ein $C_1$- bis $C_{12}$-Alkanol (V) und

(1.2.3) ein $C_5$- bis $C_{12}$-Alkan (VI)

in den Gewichtsverhältnissen Vermahlungsprodukt (IV):Alkanol (V) von 1:0,01 bis 1:1 und Vermahlungsprodukt (IV):Alkan (VI) von 1:1 bis 1:1 000 zusammenbringt unter Bildung einer Suspension (VII) und das Ganze bei dauernder Durchmischung über eine Zeitspanne von 0,5 bis 60 Minuten auf einer Temperatur von 0 bis 195°C hält und dann

(1.3) — gegebenenfalls — in einer weiteren Stufe

(1.3.1) die gemäß (1.2) erhaltene Suspension (VII) mit

(1.3.2) einer Metallverbindung (VIII) der allgemeinen Formel

$$Mt\ G_{s-t}E_t$$

worin stehen

Mt für die Metalle Aluminium bzw. Silicium,

G für einen $C_1$- bis $C_{12}$-Kohlenwasserstoffrest,

E für Chlor, Brom, Wasserstoff bzw. einen Rest —OD,

D für einen $C_2$- bis $C_{12}$-Kohlenwasserstoffrest,

s für die Zahl der Wertigkeit des Metalls Mt und

t für eine Zahl von (a) 0 bis s — 1, wenn Mt Aluminium ist bzw. (b) 0 bis 4, wenn Mt Silicium ist,

unter Erhaltung des Zustandes einer Suspension solange versetzt, bis das Atomverhältnis Titan aus dem in der Suspension (VII) enthaltenen Feststoff:Metall aus der Metallverbindung (VIII) im Bereich von 1:0,5 bis 1:20 liegt;

wobei das aus Stufe (1.2) bzw. (1.3) resultierende, in Suspension vorliegende festphasige Produkt die Titan enthaltende Katalysatorkomponente (1) ist.

**Revendication**

Procédé de préparation d'homo- et de co-polymères d'$\alpha$-mono-oléfines en $C_2$ à $C_6$ par polymérisation du monomère ou du mélange de monomères à des températures de 30 à 200°C et sous des pressions de 0,1 à 200 bars en présence d'un système catalytique selon Ziegler, formé de

(1) une composante catalytique contenant du titane et

(2) un dérivé de l'aluminium de la formule

$$Al . A_{3-n} . X_n,$$

dans laquelle

A = un reste hydrocarboné en $C_1$ à $C_{12}$

X = chlore, brome ou hydrogène et

n = un nombre valant de 0 à 2,

le rapport entre les atomes de titane de la composante catalytique (1) et les atomes d'aluminium de la composante catalytique (2) étant compris entre 1:0,1 et 1:500 et

(1.1) la composante catalytique (1) étant préparée par un broyage à sec d'un mélange de

(1.1.1) un dérivé du titane (I) solide dans les conditions normales, choisi parmi les chlorures, oxychlorures et alcoxy-chlorures (les radicaux alcoxy pouvant comporter jusqu'à 8 atomes de carbone) du titane tri- ou tétravalent et les chlorures mixtes du titane trivalent de la formule

$$TiCl_3 . Z(AlCl_3),$$

où Z a une valeur inférieure à 0,5, et de

(1.1.2) un composé halogéné (II), obtenu par un chauffage de 1 à 100 heures entre 150 et 600°C, suivi d'une chloration jusqu'à une teneur en chlore de 40 à 76 % en poids, d'une substance (III) de la formule générale

$$(Me^{II})_6 . (Me^{III})_2 . (OH)_{16} . (CO_3)_1 . (H_2O)_4,$$

dans laquelle

$Me^{II}$ = magnésium, calcium, zinc ou manganèse et

$Me^{III}$ = aluminium ou chrome,

dans un rapport pondéral du dérivé du titane (I) au dérivé halogéné (II) compris entre 1:200 et 1:2, pendant une durée de 5 à 100 heures avec une accélération de broyage de 4 à 6 $m/s^2$, produisant un produit broyé (IV) à phase solide, caractérisé en ce que, lors de la préparation de la composante catalytique (1), on mélange

(1.2) dans un stade supplémentaire

(1.2.1) le produit broyé (IV) obtenu sub (1.1) avec

(1.2.2) un alcanol (V) en $C_1$ à $C_{12}$ et

(1.2.3) un alcane (VI) en $C_5$ à $C_{12}$

avec des rapports pondéraux entre le produit broyé (IV) et l'alcanol (V) compris entre 1:0,01 et 1:1 et entre le produit broyé (IV) et l'alcane (VI) compris entre 1:1 et 1:1000, la suspension (VII) formée étant maintenue pendant 0,5 à 60 minutes, sous agitation constante, à une température entre 0 et 195°C, puis, on mélange le cas échéant,

(1.3) dans un stade additionnel

(1.3.1) la suspension (VII) obtenu sub (1.2) et

(1.3.2) un dérivé de métal (VIII) de la formule générale

$$Mt\ G_{s-t}E_t,$$

dans laquelle

Mt = le métal aluminium ou silicium

G = un reste hydrocarboné en $C_1$ à $C_{12}$

E = chlore, brome ou hydrogène ou un reste —OD

D = un reste hydrocarboné en $C_1$ à $C_{12}$

s = la valence du métal Mt et

t = (a) 0 à s − 1 si Mt = Al

(b) 0 à 4 si Mt = Si,

en maintenant la suspension, jusqu'à l'obtention d'un rapport entre les atomes de titane dans la matière solide contenue dans la suspension (VII) et les atomes de métal du dérivé de métal (VIII) compris entre 1:0,5 et 1:20,

le produit à phase solide, contenu dans la suspension et provenant du stade (1.2) ou (1.3), constituant la composante catalytique au titane (1).

**Claim**

Process for the preparation of homopolymers and copolymers of $C_2$- to $C_6$-$\alpha$-monoolefins by polymerization of the monomer or monomers at temperatures of from 30 to 200°C and under pressures of from 0.1 to 200 bar by means of a Ziegler catalyst system of

(1) a titanium-containing catalyst component and

(2) an aluminum compound of the formula

$$AlA_{3-n}X_n$$

wherein A represents a $C_1$- to $C_{12}$-hydrocarbon radical, X represents chlorine, bromine or hydrogen and n represents a number from 0 to 2, with the proviso that the atomic ratio of titanium from catalyst component (1) : aluminum from catalyst component (2) is in the range from 1:0.1 to 1:500, and that

(1.1) to prepare catalyst component (1)

(1.1.1) a titanium compound (I), which is solid under normal conditions, from the series comprising chlorides, oxychlorides and alkoxy chlorides of trivalent or tetravalent titanium in which the alkoxy groups can each contain up to 8 carbon atoms, and mixed chlorides of trivalent titanium of the formula

$$TiCl_3 . Z(AlCl_3)$$

wherein Z is a number less than 0.5, and

(1.1.2) a halogen compound (II) which has been obtained from a substance (III) of the general formula

$$(Me^{II})_6 . (Me^{III})_2 . (OH)_{16} . (CO_3)_1 . (H_2O)_4$$

wherein $Me^{II}$ represents magnesium, calcium, zinc or manganese and $Me^{III}$ represents aluminum or chromium, while keeping the substance hot at a temperature of from 150 to 600°C for from 1 to 100 hours and then chlorinating the substance to a chlorine content of the material of from 40 to 76 per cent by weight, are ground with one another in the dry state in a weight ratio of titanium compound (I):halogen compound (II) of from 1:200 to 1:2 over a period of from 5 to 100 hours with a grinding acceleration of from 4 to 6 $m/s^2$, to form a solid-phase ground product (IV), wherein, in the preparation of catalyst component (1)

(1.2) in an additional stage

(1.2.1) the ground product (IV) obtained according to (1.1)

(1.2.2) a $C_1$- to $C_{12}$-alkanol (V) and

(1.2.3) a $C_5$- to $C_{12}$-alkane (VI)

are brought together in the weight ratios of ground product (IV):alkanol (V) of from 1:0.01 to 1:1 and ground product (IV):alkane (VI) of from 1:1 to 1:1,000, to form a suspension (VII) and the entire mixture is kept at a temperature of from 0 to 195°C over a period of 0.5 to 60 minutes, with continuous thorough mixing, and then

(1.3) — where appropriate — in a subsequent stage

(1.3.1) the suspension (VII) obtained according to (1.2) is mixed with

(1.3.2) a metal compound (VIII) of the general formula

$$Mt\ G_{s-t}E_t$$

where Mt represents the metals aluminum or silicon, G represents a $C_1$- to $C_{12}$-hydrocarbon radical, E represents chlorine, bromine, hydrogen or a radical —OD, D represents a $C_1$- to $C_{12}$-hydrocarbon radical, s represents the valency number of the metal Mt and t represents a number from (a) 0 to s — 1, if Mt is aluminum, or (b) 0 to 4, if Mt is silicon,

while maintaining the mixture in the state of a suspension, until the atomic ratio of titanium from the solid contained in the suspension (VII):metal from the metal compound (VIII) is in the range from 1:0.5 to 1:20; the solid-phase product which results from stage (1.2) or (1.3) and is in suspension being the titanium-containing catalyst component (1).